# EUROPÄISCHE PATENTSCHRIFT

(11) **EP 1 397 227 B1**
(45) Veröffentlichungstag und Bekanntmachung des Hinweises auf die Patenterteilung: **30.07.2008**
(21) Anmeldenummer: 02737709.2
(22) Anmeldetag: 17.06.2002
(51) Int. Cl.: B23K 11/14, B62D 1/18

(54) **VERFAHREN ZUR HERSTELLUNG VON LAMELLENPAKETEN FÜR VERSTELLBARE LENKSÄULEN**
METHOD FOR PRODUCING LAMELLA PACKETS FOR ADJUSTABLE STEERING COLUMNS
PROCEDE DE FABRICATION DE JEUX DE DISQUES POUR COLONNES DE DIRECTION REGLABLES

(30) Priorität: 21.06.2001 CH 113501
(43) Veröffentlichungstag der Anmeldung: 17.03.2004
(73) Patentinhaber: Adval Tech Holding AG, 3172 Niederwangen (CH)
(72) Erfinder: JÖHR, Hans, CH-3122 Kehrsatz (CH)
(74) Vertreter: Bremi, Tobias Hans
(86) Internationale Anmeldenummer: PCT/CH2002/000326
(87) Internationale Veröffentlichungsnummer: WO 2003/000453

(56) Entgegenhaltungen:
- WO-A-01/28710
- DE-A- 2 402 110
- STRASSER F: "DESIGNING SHAPES FOR PROJECTION WELDING" MACHINE DESIGN, PENTON,INC. CLEVELAND, US, Bd. 60, Nr. 13, 9. Juni 1988 (1988-06-09), Seite 147,149 XP000100662 ISSN: 0024-9114

## Beschreibung

### TECHNISCHES GEBIET

Die vorliegende Erfindung betrifft ein Verfahren zur Herstellung von Lamellenpaketen für verstellbare Lenksäulen in Automobilen, wobei mindestens eine der Lamellen mit einem Kragen versehen und mit einer anderen Lamelle so zusammengefügt wird, dass sich der Kragen der einen Lamelle gegen die andere Lamelle abstützt und dadurch die Breite eines Zwischenraumes zwischen den Lamellen bestimmt.

### STAND DER TECHNIK

Aus der WO 01/28710 ist ein Verfahren dieser Art bekannt, wobei in diesem Dokument auch auf die Ausbildung der Lamellenpakete als Längs- bzw. Höhenlamellen eingegangen und deren Funktion erläutert wird.

Bei dem vorbekannten Verfahren werden die Lamellenpakete jeweils aus mindestens einer weichen Lamelle aus einem weicheren Blechmaterial und mindestens einer harten Lamelle aus einem härteren Blechmaterial zusammengesetzt, wobei zu Verbindung der Lamellen aus der weicheren Lamelle ein Niet hergestellt wird. Diese Verbindungstechnik hat den Vorteil, dass keine zusätzlichen Bauteile zur Verbindung der Lamellen erforderlich sind und zugeführt werden müssen. Allerdings benötigt das Verfahren wegen der unterschiedlichen Materialien den Einsatz von zwei Pressen. In der einen Presse werden nur die weichen Lamellen hergestellt und in der anderen Presse die harten. Die weichen Lamellen werden von der einen in den andere Presse transportiert. Dort werden die Lamellen auch gestapelt und es wird aus der weichen Lamelle der Niet hergestellt. Die beiden unterschiedlichen Materialien sind nötig, weil aus dem härteren Material der Niet nicht formbar ist und andererseits das weichere Material den Belastungen, denen die Lamellenpakete ausgesetzt werden, nicht standhält. Bei dem bekannten Verfahren wird die Anzahl Lamellen im Paket auch durch die maximal mögliche Niethöhe bestimmt.

### DARSTELLUNG DER ERFINDUNG

Die Erfindung stellt sich die Aufgabe, ein Verfahren der eingangs genannten Art anzugeben, welches material- und fertigungstechnisch weniger aufwendig ist und bei welchem auch die Anzahl der Lamellen im Paket weitgehend frei wählbar ist. Diese Aufgabe wird erfindungsgemäss gelöst durch ein Verfahren, wie es im Patentanspruch 1 gekennzeichnet ist. Demnach werden die Lamellen an mindestens einer Stelle des Kragens miteinander verschweisst.

Die Vorteile des erfindungsgemässen Verfahrens sind:
- Pro Lamellenpaket (Längs- bzw. Höhenlamellen) wird nur ein Werkzeug z.B. in Form eines Folgeverbundwerkzeugs benötigt;
- es wird nur eine Presse benötigt;
- die Anzahl Lamellen pro Paket ist relativ frei wählbar und wird nicht durch eine Grenze begrenzt, die durch die Ausziehbarkeit eines Niets gegeben ist;
- für alle Lamellen kann dieselbe Materialqualität verwendet werden;
- es müssen nur einfache Lamellengeometrien hergestellt werden, insbesondere keine Lamellen mit hohen Nietkragen, was sich auf die Ausbildung der Werkzeuge vereinfachend auswirkt;
- das Verschweissen der Wellen kann in einem separaten Arbeitsschritt ausserhalb der Presse erfolgen; auch dies wirkt sich vereinfachend auf die Ausbildung der Werkzeuge aus und erlaubt zudem höhere Produktionsgeschwindigkeiten.

Gemäss einer ersten bevorzugten Ausführungsform wird die Schweissung durch Widerstandsschweissen ausgeführt. Hierbei ist es von Vorteil, wenn der Kragen abschnittweise mit einer der gewünschten Breite des Zwischenraumes zwischen den Lamellen entsprechenden Höhe hergestellt und mit mindestens einem, über die genannte Höhe überstehenden Zacken versehen wird. Der Zacken wird dann beim Widerstandsschweissen bis auf die genannte Höhe zurückgeschmolzen. Zur Aufnahme des hierbei verdrängten Volumens des Zackens können angrenzend an den Zacken am Kragen Vertiefungen vorgesehen werden. Mit Vorteil werden entlang des Kragenrandes mehrere, insbesondere drei Zacken vorgesehen.

Gemäss einer weiteren bevorzugten Ausführungsform wird für alle Lamellen dasselbe Material verwendet.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: das Kernstück einer verstellbaren Lenksäule eines Automobils mit einem Paket Höhen- und einem Paket Längslamellen;
- Fig. 2: die beiden Lamellenpakete im Schnitt (1 - I in Fig.1);
- Fig. 3: in perspektivischer Darstellung sowie geschnitten die Ausbildung der Lamellenpakete im Bereich einer Befestigungsoese, wobei die Lamellen dort miteinander verschweisst sind;
- Fig. 4: in gleicher Darstllung die Ausbildung der Lamellenpakete in denselben Bereich vor dem Verschweissen der Lamellen; und
- Fig. 5: eine Detaildarstellung nur einer der unteren Lamellen des Pakets von Fig. 3 oder 4.

### WEGE ZUR AUSFÜHRUNG DER ERFINDUNG

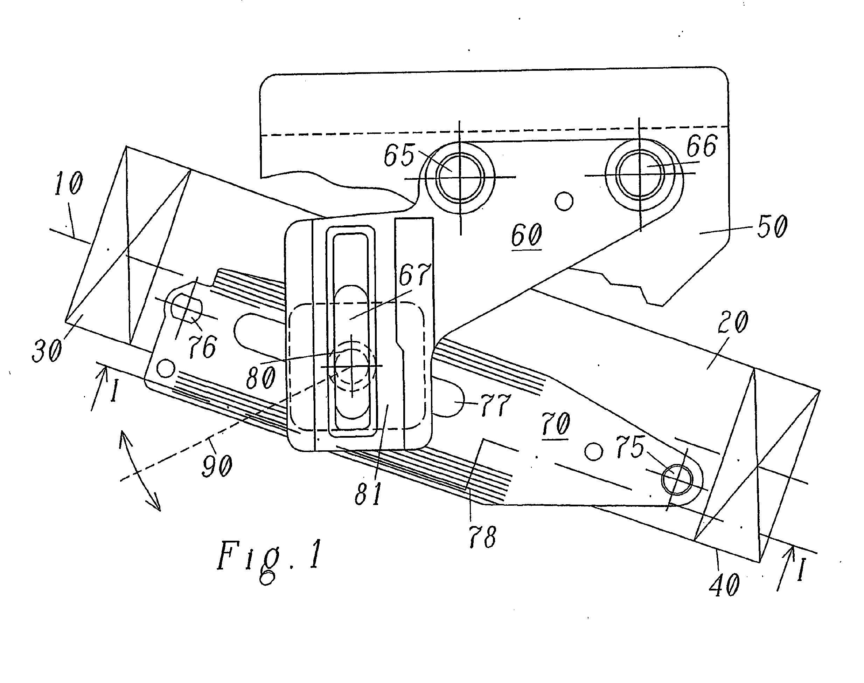

Fig. 1 zeigt das Kernstück einer verstellbaren Lenksäule eines Automobils, wobei mit 10 die Achse der Lenksäule, mit 20 ein Führungskasten, mit 30 und 40 zwei Lager für die Lenksäule im Führungskasten, mit 50 eine lediglich teilweise dargestellte, brückenartig über dem Führungskasten 20 angeordnete, chassisfeste Haltebride und mit 60 und 70 zwei Lamellenpakete bezeichnet sind. Das Lamellenpaket 60 ist mittels zweier Ösen 65 und 66 an der Haltebride 50 befestigt und das Lamellenpaket 70 mittles ebenfalls zweier Ösen 75 und 76 an dem Führungskasten 20. Ein entsprechendes, in Fig. 1 nicht sichtbares Paar von Lamellenpakten ist hinter dem Führungskasten 20 in gleicher Weise wie das Paar 60 und 70 angeordnet und befestigt. Die Lamellen des Pakets 60 weisen einen vertikal ausgerichteten Führungsschlitz 67 für die Höhenverstellung der Lenksäule auf und werden deshalb als Höhenlamellen bezeichnet. Ein entsprechender Führungsschlitz 77 ist auch in den Lamellen des Pakets 70 vorgesehen, der aber im wesentlichen horizontal ausgerichtet ist und zur Längsverstellung der Lenksäule dient. Die Lamellen des Pakets 70 werden entsprechend als Längslamellen bezeichnet. Ein im Führungskasten gehaltener Spannbolzen 80 durchsetzt die Führungsschlitze 67, 77 der Lamellenpakete 60 und 70 und zwar beider Paare vor und hinter dem Führungskasten 20. Bei gelöstem Spannbolzen 80 können die Längslamellen und mit ihnen via den Führungskasten 20 die Lenksäule gegenüber den Höhenlamellen und damit via der Haltebride 50 gegenüber dem Chassis längs- und in der Höhe verschoben und verschwenkt werden. Der Verstellbereich wird hierbei durch die Führungsschlitze 67 und 77 vorgegeben und begrenzt. In jeder gewünschten Position und Schwenklage des Verstellbereichs kann die Lenksäule durch Spannen des Spannbolzens 80 arretiert werden, was z.B. mittels eines lediglich schematisch angedeuteten Arretierhebels 90 erfolgen kann.
Beim Verspannen werden Reibflächen 78 an den Lamellen aufeinandergepresst.

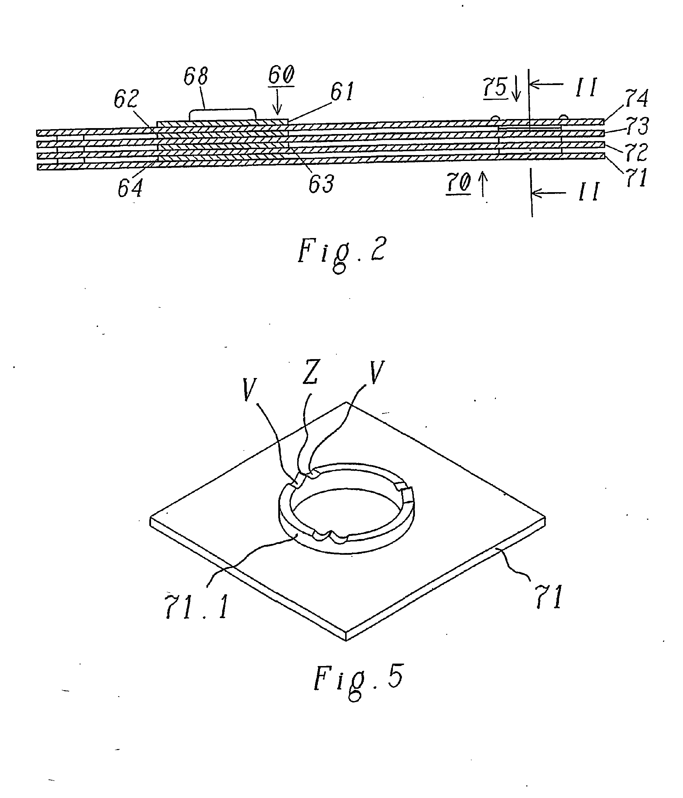

Fig. 2 zeigt einen Schnitt entlang der Schnittlinie 1 - I in Fig. 1 durch die beiden Lamellenpakete 60 und 70, die hier mit jeweils vier Lamellen 61 - 64 bzw. 71 - 74 dargestellt sind. Grundsätzlich könnten auch nur zwei oder drei Lamellen, ggf. aber auch noch mehr davon vorhanden sein. Ihre Anzahl in beiden Paketen muss auch nicht übereinstimmen. Erkennbar weisen die einzelnen Lamellen 61 - 64 bzw. 71 - 74 der beiden Pakete 60 und 70 einen ihrer Dicke etwa entsprechenden gegenseitigen Abstand auf, so dass die Pakete so ineinandergreifen können, dass auf eine Lamelle eines Paketes jeweils eine Lamelle des anderen Paketes ohne weiteren Zwischenraum in der Schichtung folgt. Der gegenseitige Abstand der Lamellen jedes Pakets wird definiert und gehalten durch Kragen, die an drei (61 - 63 bzw. 71 - 73) der vier (61 - 64 bzw. 71 - 74) Lamellen jedes Pakets von Fig. 2 entlang der Ränder der Ösen 75 und 76 (sowie auch 65 und 66) ausgeformt sind. Im Bereich ihrer gegenseitigen Berührungsflächen können die Lamellen mit einer Strukturierung, Riffelung oder dergleichen (78 in Fig. 1) zur Erhöhung ihres gegenseitigen Reibwiderstandes versehen sein. Die oberste Lamelle 61 des Paketes 60 ist auch noch mit einer wannenförmigen Ausformung 68 rund um den Führungsschlitz 67 versehen, die als Führung für ein Kopfteil 81 des Spannbolzens 80 dient.

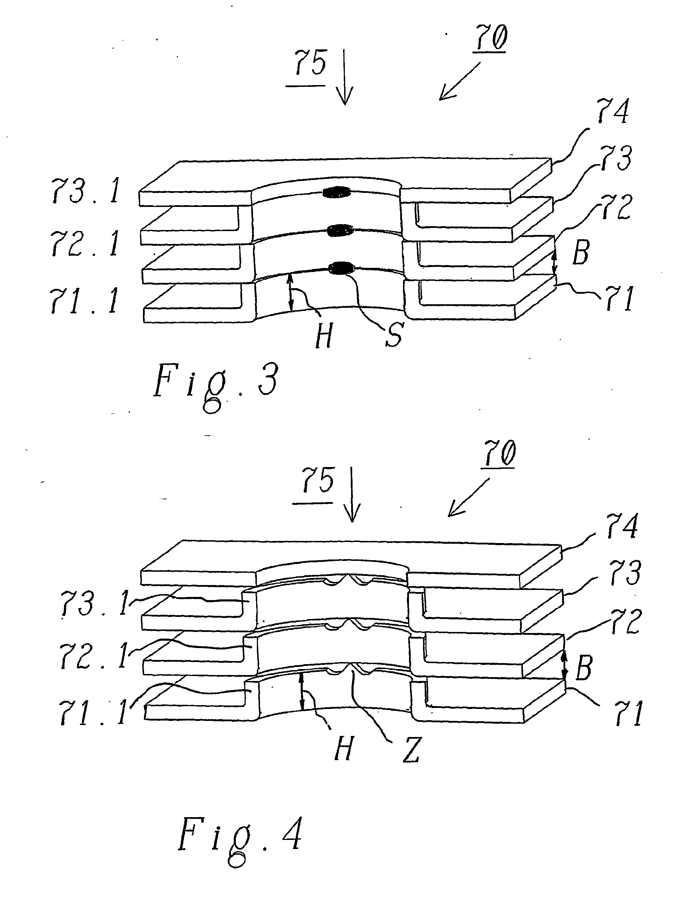

Den Bereich der Öse 75 des Lamellenpakets 70 zeigt Fig. 3 schematisch in einem Ausschnitt. Die die Breite B der Zwischenräume zwischen den Lamellen durch ihre Höhe H bestimmenden Kragen 71.1, 72.1 und 73.1 sind hier gut zu erkennen, wobei die Lamellen punktuell entlang der Kragenränder miteinander verschweisst sind. Einer der Schweisspunkte ist in Fig. 4 mit S bezeichnet.

Die Verschweissung der Lamellen erfolgt gemäss der Erfindung bevorzugt durch Widerstandsschweissen. Beim Widerstandsschweissen werden die miteinander zu verschweissenden Metallteile in Berührung miteinander gebracht und anschliessend mit den Polen einer Stromquelle verbunden. Der daraufhin über die Berührungsfläche der Metallteile fliessende Strom erzeugt in der Umgebung dieser Fläche Wärme, durch welche das Metall beidseitig der Berührungsfläche verflüssigt wird und zusammenschmilzt. Günstig für das Verfahren ist es, wenn die Geometrie der Teile so gewählt ist, dass der Querschnitt für den Stromfluss im Bereich ihrer Berührungsfläche minimal ist. Der ohm'sche Widerstand ist dann umgekehrt dort maximal und es entsteht dort lokal die meiste Verlustwärme.

Entsprechend werden, wie dies Fig. 4 zeigt und auch anhand der Einzeldarstellung eines Lamellenteils von Fig. 5 gut erkennbar ist, die Kragenränder der Lamellen mit Vorteil jeweils mit einem oder mehreren Zacken versehen, die über die Höhe H der Kragen etwas überstehen. In Fig. 4 und ig. 5 ist lediglich einer der Zacken 5 jeweils mit Z bezeichnet. Beim Fliessen des Schweissstromes kommt es an diesen Zacken lokal zur stärksten Erhitzung und zu der genannten punktuellen Verschweissung der Lamellen.

Bedingt durch die Zacken ist der gegenseitige Abstand der Lamellen bzw. die Breite B ihrer Zwischenräume vor dem Verschweissen etwas grösser als die genannte Höhe H, wie dies in Fig. 3 auch erkennbar ist. Um den Lamellenabstand auf diese Höhe H einzustellen werden die Lamellen während des Schweissvorgangs z.B. gegeneinander gepresst. Hierdurch werden die überstehenden Zacken, sobald sie sich verflüssigen, weggequescht, bis der übrige Rand des Kragens jeweils mit der benachbarten Lamelle in Kontakt kommt. Durch die sich dabei sprunghaft vergrössemde Kontaktfläche zwischen den Lamellen sinkt der elektrische Widerstand ebenso sprungartig und es kommt zu keiner weiteren Verschweissung mehr. Der Stromfluss kann dann unterbrochen werden.

Damit das beim das Wegquetschen der Zacken auf die beschriebene Weise überschüssige Schweissgut an einen definierten Ort fliessen kann, können beiseitig der Zacken auch noch jeweils Vertiefungen in den Kragenrändem vorgesehen sein, so wie dies in den Figuren 4 und 5 ebenfalls dargestellt ist. In beiden Figuren ist ein Paar solcher Vertiefungen mit V bezeichnet. Zusätzlich können die Zacken gegenüber dem Lochbereich der Oese radial etwas nach aussen versetzt ausgebildet sein, um zu verhindern, dass das verflüssigte Material der Zacken in diesen Bereich fliesst.

Das erfindungsgemässe Verfahren benötigt zu seiner Ausführung in maschinentechnischer Hinsicht zur Herstellung der Lamellen nur zwei Werkzeuge (eines für die Höhen- und eines für die Längslamellen), insbesondere Folgeverbundwerkzeuge, mit weichen die Lamellen aus jeweils einem Metallband in mehreren Schritten hergestellt werden. Die beiden Werkzeuge können in der gleichen Presse angeordnet sein. In den Werkzeugen werden die Lamellen vorzugsweise auch noch jeweils übereinandergestapelt. Das Verschweissen der Lamellen erfolgt dagegen vorzugsweise in einer separaten, der Presse nachgeordneten Schweissstation.

### BEZEICHNUNGSLISTE

- 10: die Achse der Lenksäule
- 20: Führungskasten
- 30, 40: Lager für die Lenksäule im Führungskasten
- 50: chassisfeste Haltebride
- 60: Höhen-Lamellenpaket
- 61-64: Lamellen
- 65, 66: Befestigungsoesen
- 67: Führungsschlitz
- 68: wannenförmige Ausformung.
- 70: Längs-Lamellenpaket
- 71 - 74: Lamellen
- 71.1-73.1: Kragen
- 75, 76: Befestigungsoesen
- 77: Führungsschlitz
- 78: Reibflächen 78
- 80: Spannbolzen 80
- 81: Kopfteil des Spannbolzens 80
- 90: Arretierhebel für den Spannbolzen 80
- H: Höhe der Kragen
- B: Breite der Lamellen-Zwischenräume
- Z: Zacken
- V: Vertiefungen beidseitig der Zacken

## Patentansprüche

1. Verfahren zur Herstellung von Lamellenpaketen(z.B. 70) für verstellbare Lenksäulen in Automobilen, wobei mindestens eine der Lamellen (z.B. 71) mit einem Kragen (71.1) versehen und mit einer anderen Lamelle (z.B. 72) so zusammengefügt wird, dass sich der Kragen (71.1) der einen Lamelle (71) gegen die andere Lamelle (72) abstützt und dadurch die Breite (B) eines Zwischenraumes zwischen den Lamellen (71,72) bestimmt, **dadurch gekennzeichnet, dass** die beiden Lamellen (71, 72) an mindestens einer Stelle (z.B. S) des Kragens (71.1) miteinander verschweisst werden.

2. Verfahren nach Anspruch 1, **dadurch gekennzeichnet, dass** die Schweissung durch Widerstandsschweissen ausgeführt wird.

3. Verfahren nach Anspruch 2, **dadurch gekennzeichnet, dass** der Kragen (71.1) abschnittweise mit einer der gewünschten Breite (B) des Zwischenraumes zwischen den Lamellen entsprechenden Höhe (H) hergestellt und mit mindestens einem, über diese Höhe (H) überstehenden Zacken (Z) versehen wird.

4. Verfahren nach Anspruch 3, **dadurch gekennzeichnet, dass** der mindestens eine Zacken (Z) beim Widerstandsschweissen bis auf die genannte Höhe (H) zurückgeschmolzen wird.

5. Verfahren nach Anspruch 4, **dadurch** gekenzeichnet, dass an dem Kragen (71.1) angrenzend an den mindestens einen Zacken (Z) jeweils Vertiefungen (V) zur Aufnahme des beim Widerstandsschweissen verdrängten Volumens des mindestens einen Zackens (Z) vorgesehen werden.

6. Verfahren nach einem der Ansprüche 1 - 5, **dadurch gekennzeichnet, dass** für alle Lamellen (61 -64, 71 - 74) dasselbe Material verwendet wird.

## Claims

1. A method for producing lamella packets (e.g. 70) for adjustable steering columns in cars, at least one of the lamellae (e.g. 71) being provided with a collar (71.1) and being joined to another lamella (e.g. 72) in such a manner that the collar (71.1) of the one lamella (71) is supported against the other lamella (72) and thereby determines the width (B) of a gap between the lamellae (71, 72), **characterized in that** the two lamellae (71, 72) are welded to each other at at least one location (e.g. S) on the collar (71.1).

2. The method as claimed in claim 1, **characterized in that** the welding is implemented by resistance welding.

3. The method as claimed in claim 2, **characterized in that** the collar (71.1) is produced in some sections at a height (H) corresponding to the desired width (B) of the gap between the lamellae, and is provided with at least one tooth (Z) protruding above this height (H).

4. The method as claimed in claim 3, **characterized in that** the at least one tooth (Z) is melted back to the said height (H) during the resistance welding.

5. The method as claimed in claim 4, **characterized in that** respective depressions (V) for receiving the volume of the at least one tooth (Z) displaced during the resistance welding are provided on the collar (71.1) adjacent to the at least one tooth (Z) .

6. The method as claimed in one of claims 1 - 5, **characterized in that** the same material is used for all of the lamellae (61-64, 71-74).

## Revendications

1. Procédé de fabrication de paquets de disques (par exemple 70) pour des colonnes de direction réglables dans des automobiles, au moins l'un des disques (par exemple 71) étant pourvu d'un rebord (71.1) et étant assemblé à un autre disque (par exemple 72) de telle sorte que le rebord (71.1) du premier disque (71) s'appuie contre l'autre disque (72), et définisse de ce fait la largeur (B) d'un espace intermédiaire entre les disques (71, 72), **caractérisé en ce que** les deux disques (71, 72) sont soudés l'un à l'autre en au moins un endroit (par exemple S) du rebord (71.1).

2. Procédé selon la revendication 1, **caractérisé en ce que** le soudage est réalisé par soudage à résistance.

3. Procédé selon la revendication 2, **caractérisé en ce que** le rebord (71.1) est fabriqué en partie avec une hauteur (H) correspondant à la largeur souhaitée (B) de l'espace intermédiaire entre les disques et est pourvu d'au moins une dent (Z) saillant au-delà de cette hauteur (H).

4. Procédé selon la revendication 3, **caractérisé en ce que** l'au moins une dent (Z) est refusionnée lors du soudage à résistance jusqu'à ladite hauteur (H).

5. Procédé selon la revendication 4, **caractérisé en ce que** l'on prévoit au niveau du rebord (71.1), des renfoncements (v) respectifs adjacents a l'au moins une dent (Z), pour recevoir le volume, refoulé lors du soudage à résistance, de l'au moins une dent (Z).

6. Procédé selon l'une quelconque des revendications 1 à 5, **caractérisé en ce que** l'on utilise le même matériau pour tous les disques (61-64, 71-74).
